# EUROPÄISCHE PATENTANMELDUNG

(11) **EP 1 854 941 A2**
(43) Veröffentlichungstag der Anmeldung: **14.11.2007**
(21) Anmeldenummer: 07107886.9
(22) Anmeldetag: 10.05.2007
(51) Int. Cl.: E04G 17/065

(54) **Spannvorrichtung für Ankerstäbe von Betonschalungen**

(30) Priorität: 10.05.2006 DE 102006023062
(71) Anmelder: Robusta-Gaukel GmbH & Co.KG, 71263 Weil der Stadt (DE)
(72) Erfinder: Gaukel, Jan Martin, 70199, Stuttgart (DE); Neuwirth, Hans, 71263, Weil der Stadt (DE); Lissner, Johannes, 71229, Leonberg-Höfingen (DE)
(74) Vertreter: Pfiz, Thomas

(57) **Zusammenfassung**

Die Erfindung betrifft eine Spannvorrichtung für Ankerstäbe von Betonschalungen (10) mit einer ein Innengewinde (26) aufweisenden längsgeteilten Mutter (14), deren Mutterhälften (18,20) zwischen einer in Gewindeeingriff mit dem Außengewinde (22) des Ankerstabs (12) stehenden Eingriffstellung und einer im gegenseitigen Abstand befindlichen Freigabestellung verstellbar sind, und einem Aufnahmekörper (16) zur Sicherung der Mutterhälften (18,20) zumindest in der Freigabestellung. Für eine Schnellverstellmöglichkeit wird vorgeschlagen, dass der Aufnahmekörper durch einen mit inneren Anlaufschrägen (48) versehenen Mutterkäfig (16) gebildet ist, und dass die Mutterhälften (18,20) entlang den Anlaufschrägen (48) zwischen der Freigabestellung und der Eingriffstellung verschiebbar sind.

## Beschreibung

Die Erfindung betrifft eine Spannvorrichtung für Ankerstäbe von Betonschalungen mit einer ein Innengewinde aufweisenden längsgeteilten Mutter, deren Mutterhälften zwischen einer in Gewindeeingriff mit dem Außengewinde des Ankerstabs stehenden Eingriffstellung und einer im gegenseitigen Abstand befindlichen Freigabestellung verstellbar sind, und einem Aufnahmekörper zur Sicherung der Mutterhälften zumindest in der Freigabestellung.

Durch solche Spannvorrichtungen werden über den durchgehenden Ankerstab die Spreizkräfte aufgenommen, die beim Schütten des Betons zwischen den Schalwänden auftreten. In der DE-A 195 10 117 ist eine gattungsgemäße Vorrichtung offenbart, welche über einen mehr oder weniger lang aus der Schalung herausragenden Endabschnitt des Ankerstabs ohne Gewindeeingriff beweglich ist, um den Arbeitsaufwand beim Ein- und Ausschalen reduzieren zu können. Die Mutterhälften sind dort als teilzylindrische Schalen mit einem Außengewinde versehen, auf das eine mit flügelförmigen Ansätzen versehene nabenförmige Überwurfmutter aufschraubbar ist. Das frei zugängliche Außengewinde ist aber gegen Beschädigungen insbesondere bei harten Drehstößen auf die Flügel und gegen Verschmutzung empfindlich, und die erforderliche Schraubbewegung und problematische Zentrierung erschwert die Handhabung.

Ausgehend hiervon liegt der Erfindung die Aufgabe zugrunde, die im Stand der Technik aufgetretenen Nachteile zu vermeiden und eine zur Erhöhung der Arbeitseffizienz auch unter rauen Baustellenbedingungen einfach und schnell bedienbare Konstruktion zu schaffen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, über eine Schrägführung einen einfachen Wechsel zwischen Eingriffs- und Freigabestellung der Mutterhälften zu ermöglichen. Dementsprechend wird erfindungsgemäß vorgeschlagen, dass der Aufnahmekörper durch einen mit inneren Anlaufschrägen versehenen Mutterkäfig gebildet ist, und dass die Mutterhälften über äußere Gleitflächen entlang der Anlaufschrägen zwischen der Freigabestellung und der Eingriffstellung verschiebbar bzw. verstellbar sind. Auf diese Weise ist unter Vermeidung einer Schraubbewegung eine einfache Verstellung möglich, so dass auch unter schwierigen Arbeitsbedingungen eine manuell einfache und sichere Handhabung gewährleistet ist. Insbesondere ist damit auch eine Einhandbedienung unter beengten Platzverhältnissen möglich. Zudem sind die Führungsflächen im dem Käfig nach außen geschützt.

Vorteilhafterweise sind die Anlaufschrägen durch Mehrkant- oder Konusflächen gebildet, die in axialer Richtung des zentral durchgreifenden Ankerstabs gesehen geneigt sind, so dass eine Axial- und Radialverstellung gleichzeitig möglich ist. Dabei ist es möglich, dass die die Mutterhälften unter radialer Abstandsverstellung in Führungsrichtung der Anlaufschrägen drehfrei bewegbar sind.

Eine weitere Verbesserung ergibt sich dadurch, dass die Mutterhälften vorzugsweise über einen Formschluss der Gleitflächen in den Anlaufschrägen zumindest in der Eingriffstellung drehfest mit dem Mutterkäfig verbunden sind. Auf diese Weise können bei einer abschließenden Schraubverspannung hohe Belastungen sicher aufgenommen werden.

Eine baulich vorteilhafte Ausführung sieht vor, dass die Gleitfläche der Mutterhälften durch Seitenflächen eines Polyeders, insbesondere durch jeweils zwei benachbarte Seitenflächen eines Pyramidenstumpfs gebildet ist.

Um eine sichere Zentrierung zu gewährleisten, ist es von Vorteil, wenn die Mutter an einer verjüngten Stirnseite in der Eingriffstellung im Abstand zu einer zugewandten Bodenfläche des Mutterkäfigs gehalten ist.

Eine eventuelle Schrägstellung des Ankerstabs lässt sich dadurch ausgleichen, dass der Mutterkäfig vorzugsweise über eine ballige Lagerfläche begrenzt kippbeweglich an einer gegen die Betonschalung andrückbaren Druckplatte gelagert ist.

Eine weitere robuste Ausführung sieht vor, dass bei einer Schraubbewegung der geschlossenen Mutter die Schraubkraft über den Mutterkäfig auf die Druckplatte übertragbar ist.

Um die Handhabung zu erleichtern, ist es vorteilhaft, wenn die Mutterhälften über ein Federelement mit einer Rückstellkraft zur Rückstellung in die Eingriffstellung beaufschlagt sind. In diesem Zusammenhang ist es auch von Vorteil, wenn das zwischen einer Stirnseite der Mutterhälften und einer zugewandten Stützpartie des Mutterkäfigs vorgespannte Federelement durch manuelle Handhabung der Mutterhälften komprimierbar ist.

Um einen definierten Gewindeeingriff sicherzustellen, ist es günstig, wenn die Mutterhälften über paarweise ineinandergreifende Sicherungsmittel in ihrer axialen Lage zueinander fixiert sind.

Für eine weitere Bedienungserleichterung ist es vorgesehen, dass die Mutterhälften jeweils einen nach außen auskragenden, vorzugsweise mit einer Griffmulde versehenen Flügel zum Aufbringen eines Drehmoments und/oder einer axialen Zugkraft aufweisen.

Um hierbei eine Axialverstellung zu erlauben, weist der Mutterkäfig einander diametral gegenüberliegende Käfigwanddurchbrüche für einen axial beweglichen Flügeldurchgriff auf. Für eine weitere Verbesserung der Belastungsfestigkeit können die Flügel an ihren in Drehrichtung einander gegenüberliegenden Seiten mit Ausnehmungen versehen sein, in welche die freien Ränder der Käfigwanddurchbrüche mit Spiel eingreifen.

Vorteilhafterweise sind die Mutterhälften in dem Mutterkäfig verliersicher gehalten.

Eine weitere vorteilhafte Ausgestaltung sieht vor, dass an dem Mutterkäfig vorzugsweise in einem Fußbereich ein mit einem Hebelarm versehenes Drehwerkzeug zum vereinfachten Aufbringen eines Drehmoments unverlierbar angeordnet ist. Hierbei ist es für eine günstige Ausgangsdrehorientierung vorteilhaft, wenn sich das vorzugsweise als Ringschlüssel ausgebildete Drehwerkzeug zwischen einer drehfesten und einer drehfreien Verbindungsstellung an dem Mutterkäfig bewegen lässt.

Im Folgenden wird die Erfindung anhand der in der Zeichnung in schematischer Weise dargestellten Ausführungsbeispiele näher erläutert. Es zeigen
- Fig. 1: eine Schnellspannvorrichtung für Ankerstäbe in der Spannposition an einer Betonschalung im Axialschnitt;
- Fig. 2: die Schnellspannvorrichtung nach Fig. 1 in einer Freigabestellung im Axialschnitt;
- Fig. 3: eine schaubildliche Explosionsdarstellung der Spannvorrichtung;
- Fig. 4 und 5: eine weitere Ausführungsform einer Schnellspannvorrichtung in einer Explosionsdarstellung und im Zusammenbau.

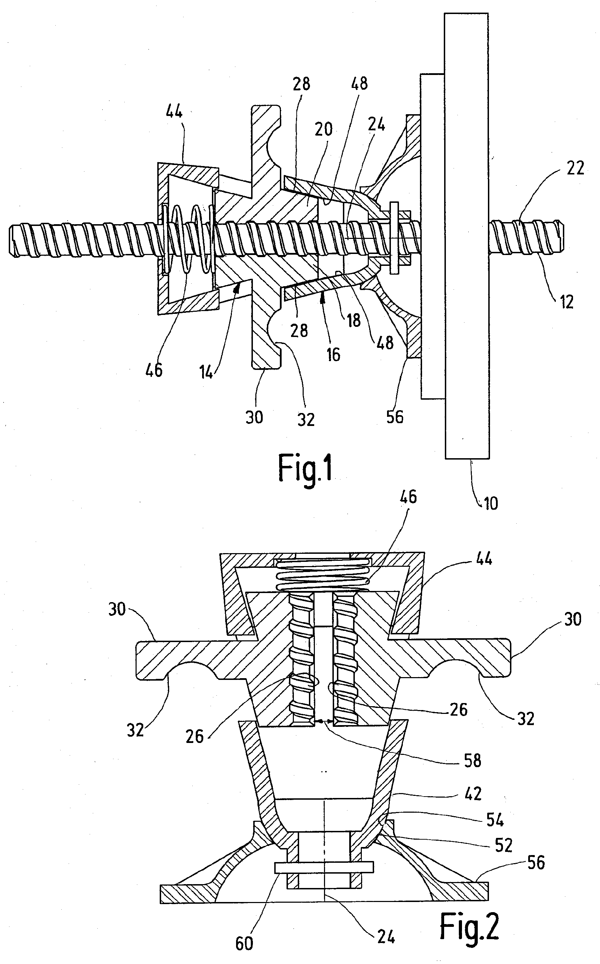

Die in der Zeichnung dargestellte Spannvorrichtung dient als Schnellspannmutter zur gegenseitigen Verankerung einander gegenüberliegender Schalwände 10 von Betonschalungen über quer durchgehende Ankerstäbe 12. Sie umfasst zu diesem Zweck eine längsgeteilte Mutter 14 und einen Mutterkäfig 16, wobei die Mutterhälften 18, 20 zwischen einer in Gewindeeingriff mit dem Außengewinde (Grobgewinde) 22 des Ankerstabs 12 stehenden Eingriffstellung (Fig. 1) und einer in gegenseitigem radialem Abstand befindlichen Freigabestellung (Fig. 2) verstellbar sind. Auf diese Weise lässt sich die Schnellspannmutter 10 durch eine axiale Bewegung auf den Ankerstab 12 aufschieben bzw. von diesem abziehen, ohne dass dabei eine Schraubbewegung erforderlich ist. Die hier verwendeten Begriffe "axial" und "radial" sind auf die Zentralachse 24 des durchgehenden Ankerstabs bzw. der Schraubverbindung bezogen.

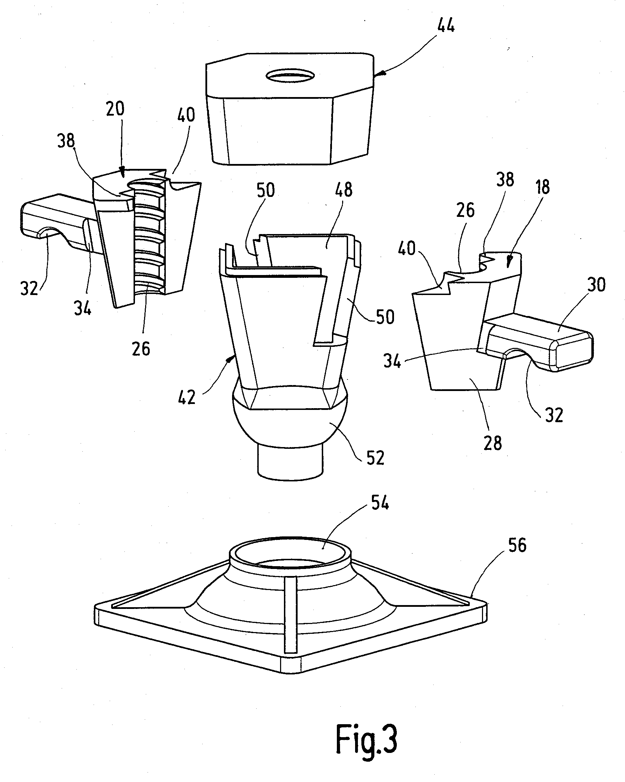

Wie am besten aus Fig. 3 ersichtlich, bestehen die Mutterhälften 18, 20 spiegelbildlich aus jeweils einem halbschaligen Formkörper, der an seiner ebenen Innenfläche mit einem halbseitig auf das Außengewinde 22 des Ankerstabs 12 passenden, axial durchgehenden Innengewinde 26 versehen ist und außenseitig in der Form eines Pyramidenstumpfsegments mit zwei benachbarten Seitenflächen eine axial geneigte Gleitfläche 28 bildet. Im Kantenbereich der Gleitfläche 28 ist ein radial abstehender Flügelarm 30 angeformt. Dieser weist an seiner der Betonschalung 10 zugewandten Unterseite eine Griffmulde 32 auf. An der Wurzel des Flügels 30 sind in Drehrichtung weisende Schlitze 34 angebracht, deren Funktion nachstehend erläutert wird. Zur gegenseitigen Axialfixierung der Mutterhälften 18, 20 sind am erweiterten Stirnende tangential verlaufende Vorsprünge 38 und Ausnehmungen 40 für einen paarweisen gegenseitigen Eingriff vorgesehen.

Der zweiteilig zusammengesetzte Mutterkäfig 16 besteht aus einem Führungsteil 42 und einem Kopfteil 44. Diese beiden Teile werden nach Einsetzen der Mutterhälften 18, 20 und der in Fig. 1 und 2 gezeigten Rückstellfeder 46 an ihren freien Stirnkanten über eine Formschlussverbindung zusammengefügt und durch Schweißen stoffschlüssig miteinander verbunden. Das Führungsteil 42 bildet dann mit seinen inneren Vierkant-Schrägflächen 48 eine Führung für die Gleitflächen 28 der Mutterhälften 18, 20, wobei einander diametral gegenüberliegende Wanddurchbrüche 50 einen Durchgriff der Flügel 30 erlauben. Hierbei greifen die Längsränder der Wanddurchbrüche 50 mit Spiel in die Schlitze 34 der Flügel 30 ein, so dass zumindest in der unteren Eingriffstellung der Mutterhälften 18, 20 ein Passsitz nur zwischen den korrespondierenden Flächen 28, 48 erreicht wird. An der Unterseite weist das Führungsteil 42 eine ballige Fußfläche 52 auf, die in einer formkomplementären Lagerfläche 54 einer Druckplatte 56 begrenzt verkippbar gelagert ist, um ggf. eine Schrägstellung des Ankerstabs 12 auszugleichen.

Wie am besten aus Fig. 2 ersichtlich, lassen sich die Mutterhälften 18, 20 durch manuelles Aufbringen einer axialen Zugkraft entgegen der Rückstellfeder 46 in dem Mutterkäfig 16 nach oben in eine Freigabestellung bewegen, in welcher die Innengewindehälften 26 in einem radialen Abstand 58 voneinander getrennt sind, um frei von einem wirksamen Gewindeeingriff eine Längsbewegung auf dem Ankerstab 12 zu ermöglichen. Die Rückstellefeder 46 sollte dabei zweckmäßig durch Handkraft komprimierbar sein, wobei die Griffmulden 32 an den Flügel 30 eine ergonomische Handhabung unterstützen. Die Mutterhälften 18, 20 sind in dem geschlossenen Käfig 16 verliersicher gefangen. Ein über die lichte Öffnung der Lagerfläche 54 radial überstehender Bund 60 am Endstutzen des Führungsteils 42 sorgt dafür, dass auch die Druckplatte 56 unverlierbar bleibt.

Beim Aufschieben auf den in Fig. 1 rechts abgebrochen gezeigten Ankerstab 12 können die Mutterhälften im Bereich der vorgesehenen Spannstelle losgelassen werden, so dass sie unter der Kraft der Rückstellfeder 46 selbständig in die Eingriffstellung gelangen. Hierbei gleiten die Mutterhälften 18, 20 über die Anlaufschrägen 48 aufeinander zu, bis schließlich die ebenen Innenflächen gegeneinander anliegen und das Gewinde 26 geschlossen wird. Um die Spannkräfte zu erhöhen, können mit einem Hammer tangentiale Drehschläge auf die Flügel 30 ausgeübt werden. Das hierbei aufgebrachte Drehmoment wird über die Passflächen 28, 48 eingeleitet, wobei durch die Schlitze 34 in den Flügeln 30 bei geeignetem Spiel sichergestellt wird, dass dort keine übermäßigen Beanspruchungen auftreten.

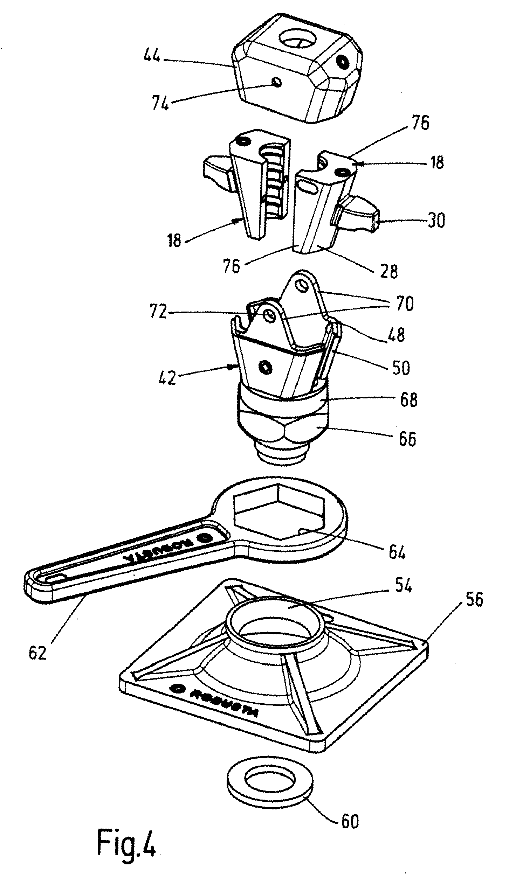

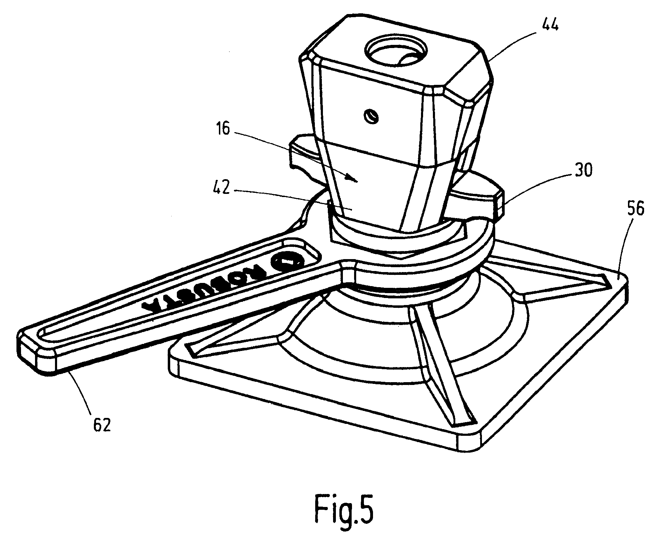

Bei der in Fig. 4 und 5 dargestellten Ausführungsform sind gleiche oder ähnliche Teile mit den gleichen Bezugszeichen wie oben beschrieben versehen. Ein Unterschied besteht darin, dass zur weiteren Bedienungserleichterung ein Ringschlüssel 62 vorgesehen ist. Dieser sitzt im Montagezustand mit seinem Innensechskant 64 auf einem entsprechenden Außensechskant 66 am Fuß des Führungsteils 42, um ein Drehmoment ggf. durch Hammerschläge aufzubringen. Auf diese Weise kann ein großer Hebelarm am Schlüsselschaft genutzt werden, während die Flügel 30 verkürzt werden können, da dort nur noch die Handhabung zur axialen Verstellung erforderlich ist.

Im Zusamenbauzustand ist der Ringschlüssel 62 unverlierbar zwischen Mutter 14 bzw. Mutterkäfig 16 und Druckplatte 56 angeordnet. Er lässt sich jedoch begrenzt axial nach oben heben, um über der Ringfläche 68 durch freie Drehung eine geeignete Ausgangsstellung in Drehrichtung zu wählen.

Zur Verbindung mit dem Kopfteil 44 sind an dem Führungsteil 42 nach oben abstehende Laschen 70 angeformt, die sich über nicht gezeigte Blindniete in den korrespondierenden Bohrungen 72, 74 ggf. lösbar mit den Seitenflächen des Kopfteils 44 verbinden lassen. Die beiden Mutterhälften 18 besitzen eine mehrkantförmig abgeschrägte Gleitfläche 28, wobei durch die angrenzenden Parallelflächen 76 eine Materialeinsparung und insgesamt kompaktere Bauform erreicht wird. Zugleich unterstützen die Parallelflächen 76 den Formschluss mit dem Führungsteil 42.

## Patentansprüche

1. Spannvorrichtung für Ankerstäbe von Betonschalungen mit einer ein Innengewinde (26) aufweisenden längsgeteilten Mutter (14), deren Mutterhälften (18,20) zwischen einer in Gewindeeingriff mit dem Außengewinde (22) des Ankerstabs (12) stehenden Eingriffstellung und einer im gegenseitigen Abstand befindlichen Freigabestellung verstellbar sind, und einem Aufnahmekörper (16) zur Sicherung der Mutterhälften (18,20) zumindest in der Freigabestellung, **dadurch gekennzeichnet, dass** der Aufnahmekörper durch einen mit inneren Anlaufschrägen (48) versehenen Mutterkäfig (16) gebildet ist, und dass die Mutterhälften (18,20) über äußere Gleitflächen (28) entlang den Anlaufschrägen (48) zwischen der Freigabestellung und der Eingriffstellung verschiebbar sind.

2. Spannvorrichtung nach Anspruch 1, **dadurch gekennzeichnet, dass** die Anlaufschrägen (48) durch in axialer Richtung des zentral durchgreifenden Ankerstabs (12) geneigte Mehrkant- oder Konusflächen gebildet sind.

3. Spannvorrichtung nach Anspruch 1 oder 2, **dadurch gekennzeichnet, dass** die die Mutterhälften (18,20) unter radialer Abstandsverstellung in Führungsrichtung der Anlaufschrägen (48) drehfrei bewegbar sind.

4. Spannvorrichtung nach einem der Ansprüche 1 bis 3, **dadurch gekennzeichnet, dass** die Mutterhälften (18,20) vorzugsweise über einen Formschluss der Gleitflächen (28) in den Anlaufschrägen (48) zumindest in der Eingriffstellung drehfest mit dem Mutterkäfig (16) verbunden sind.

5. Spannvorrichtung nach einem der Ansprüche 1 bis 4, **dadurch gekennzeichnet, dass** die Gleitflächen der Mutterhälften (18,20) durch Seitenflächen eines Polyeders, insbesondere durch benachbarte Seitenflächen eines Pyramidenstumpfs gebildet sind.

6. Spannvorrichtung nach einem der Ansprüche 1 bis 5, **dadurch gekennzeichnet, dass** die Mutter (14) an einer verjüngten Stirnseite in der Eingriffstellung im Abstand zu einer zugewandten Bodenfläche des Mutterkäfigs (16) gehalten ist.

7. Spannvorrichtung nach einem der Ansprüche 1 bis 6, **dadurch gekennzeichnet, dass** der Mutterkäfig (16) vorzugsweise über eine ballige Lagerfläche (52) begrenzt verkippbar an einer gegen die Betonschalung (10) andrückbaren Druckplatte (56) gelagert ist.

8. Spannvorrichtung nach Anspruch 7, **dadurch gekennzeichnet, dass** bei einer Schraubbewegung der geschlossenen Mutter (14) die Schraubkraft über den Mutterkäfig (16) auf die Druckplatte (56) übertragbar ist.

9. Spannvorrichtung nach einem der Ansprüche 1 bis 8, **dadurch gekennzeichnet, dass** die Mutterhälften (18,20) über ein Federelement (46) mit einer Rückstellkraft zur Rückstellung in die Eingriffstellung beaufschlagt sind.

10. Spannvorrichtung nach einem der Ansprüche 1 bis 9, **dadurch gekennzeichnet, dass** das zwischen einer Stirnseite der Mutterhälften (18,20) und einer zugewandten Stützpartie (44) des Mutterkäfigs (16) vorgespannte Federelement (46) durch manuelle Handhabung der Mutterhälften (18,20) komprimierbar ist.

11. Spannvorrichtung nach einem der Ansprüche 1 bis 10, **dadurch gekennzeichnet, dass** die Mutterhälften (18,20) über paarweise ineinandergreifende Sicherungsmittel (38,40) in ihrer axialen Lage zueinander fixiert sind.

12. Spannvorrichtung nach einem der Ansprüche 1 bis 11, **dadurch gekennzeichnet, dass** die Mutterhälften (18,20) jeweils einen nach außen auskragenden, vorzugsweise mit einer Griffmulde (32) versehenen Flügel (30) zum Aufbringen eines Drehmoments und/oder einer axialen Zugkraft aufweisen.

13. Spannvorrichtung nach einem der Ansprüche 1 bis 12, **dadurch gekennzeichnet, dass** der Mutterkäfig (16) einander diametral gegenüberliegende Käfigwanddurchbrüche (50) für einen axial beweglichen Flügeldurchgriff aufweist.

14. Spannvorrichtung nach einem der Ansprüche 1 bis 13, **dadurch gekennzeichnet, dass** die Flügel (30) an ihren in Drehrichtung einander gegenüberliegenden Seiten mit Ausnehmungen (34) versehen sind, in welche die freien Axialränder der Käfigwanddurchbrüche (50) mit Spiel eingreifen.

15. Spannvorrichtung nach einem der Ansprüche 1 bis 14, **dadurch gekennzeichnet, dass** die Mutterhälften (18,20) in dem Mutterkäfig (16) verliersicher gehalten sind.

16. Spannvorrichtung nach einem der Ansprüche 1 bis 15, **dadurch gekennzeichnet, dass** an dem Mutterkäfig (16) vorzugsweise in einem Fußbereich ein mit einem Hebelarm versehenes Drehwerkzeug (62) unverlierbar angeordnet ist.

17. Spannvorrichtung nach Anspruch 16, **dadurch gekennzeichnet, dass** sich das vorzugsweise als Ringschlüssel ausgebildete Drehwerkzeug (62) zwischen einer drehfesten und einer drehfreien Verbindungsstellung an dem Mutterkäfig (16) bewegen lässt.
